Europäisches Patentamt

European Patent Office

Office européen des brevets

(11) Veröffentlichungsnummer: **0 290 852 B1**

(19)

## EUROPÄISCHE PATENTSCHRIFT

(12)

(45) Veröffentlichungstag der Patentschrift: **23.06.93**

(21) Anmeldenummer: **88106624.5**

(22) Anmeldetag: **26.04.88**

(51) Int. Cl.⁵: **G03C 1/775**

(54) **Wasserfester Schichtträger für lichtempfindliche Materialien.**

(30) Priorität: **15.05.87 DE 3716269**

(43) Veröffentlichungstag der Anmeldung:
**17.11.88 Patentblatt 88/46**

(45) Bekanntmachung des Hinweises auf die
Patenterteilung:
**23.06.93 Patentblatt 93/25**

(84) Benannte Vertragsstaaten:
**AT BE CH DE ES FR GB IT LI LU NL SE**

(56) Entgegenhaltungen:
**EP-A- 0 183 467**
**DE-A- 3 210 621**
**US-A- 4 614 688**

**CHEMICAL ABSTRACTS, Band 100, Nr. 22, 28.
Mai 1984, Seite 94, Nr. 176622b, Columbus,
Ohio, US**

(73) Patentinhaber: **Felix Schoeller jr. Papierfabrik
GmbH & Co. KG
Burg Gretesch
W-4500 Osnabrück(DE)**

(72) Erfinder: **Dethlefs, Ralf-Burkhard, Dr.
Dipl.-Chem.
Grenzweg 4
W-4516 Bissendorf(DE)**
Erfinder: **Scholz, Bernd, Dipl.-Ing.
Max-Reger-Strasse 18
W-4500 Osnabrück(DE)**
Erfinder: **Wysk, Wolfram, Dipl.-Ing.
Brunnenweg 19
W-4513 Belm(DE)**

(74) Vertreter: **Rücker, Wolfgang, Dipl.-Chem. Patentanwalt
Bergiusstrasse 2b
W-3000 Hannover 51 (DE)**

EP 0 290 852 B1

**Beschreibung**

Die Erfindung betrifft einen fotografischen Schichtträger mit einer wasserfesten Beschichtung aus Polyolefinharz.

Wasserfeste fotografische Schichtträger bestehen aus Kunststoffilm oder aus Basispapier mit vorzugsweise auf beiden Seiten aufgebrachten Kunstharzbeschichtungen, die aus Polymeren, z.B. aus Polyethylen, bestehen und mittels Extrusionsbeschichtung aufgebracht werden oder aus organischer Lackmischung, die mittels Tauch- oder Sprühverfahren auf das Papier gebracht und mittels Wärme oder energiereicher Strahlung getrocknet und verfestigt wird.

Auf einer der Kunstharzschichten werden dann eine oder mehrere Silberhalogenid enthaltende lichtempfindliche Schichten aufgebracht. Bei den lichtempfindlichen Schichten kann es sich sowohl um Schwarz/Weiß- als auch um farbfotografische Schichten handeln.

Die unter der bzw. den lichtempfindlichen Schichten angeordnete Kunstharzschicht (Vorderseitenbeschichtung) enthält üblicherweise lichtreflektierendes Weißpigment sowie gegebenenfalls Farbpigmente, optische Aufheller und/oder andere Zusätze wie Antistatika, Dispergierhilfsmittel für das Weißpigment, Antioxidantien, Trennmittel und dergleichen.

Die auf der den lichtempfindlichen Schichten entgegengesetzten Papierseite angeordnete Kunstharzschicht (Rückseitenbeschichtung) kann pigmentiert oder unpigmentiert sein und/oder andere Zusätze enthalten, die sich aus der jeweiligen Verwendung des Laminats als fotografischer Träger ergeben und die grundsätzlich denen der Vorderseitenbeschichtung entsprechen können.

Die Vorderseitenbeschichtung kann noch zusätzliche Funktionsschichten erhalten, durch die beispielsweise die Haftung der lichtempfindlichen Schichten verbessert wird.

Auch die Rückseitenbeschichtung kann noch mit weiteren Funktionsschichten versehen werden, die beispielsweise die Beschreibbarkeit, Antistatik, Gleiteigenschaften, Planlage oder mehrere dieser Eigenschaften verbessern.

Um zu erreichen, daß ein beidseitig mit Polyethylen beschichteter fotografischer Papierträger nach einer einseitigen Aufbringung fotografischer Schichten keine unerwünschte Krümmung aufweist, wird üblicherweise so verfahren, daß die vorderseitige Polyethylenschicht im wesentlichen aus einem LDPE besteht, während die rückseitige Polyethylenschicht aus überwiegend HDPE besteht (DOS 20 28 600).

Die Beschichtung eines fotografischen Basispapiers oder eines Filmmaterials mit einem Polyolefinüberzug mittels Extrusion durch eine Breitschlitzdüse ist ein an sich bekanntes Verfahren. Es ist ebenso bekannt, daß bei der Extrusion von Polyethylen (PE) gewisse Schwierigkeiten auftreten, die bei der hohen Empfindlichkeit fotografischer Prozesse zu deutlichen Störungen oder sogar zur Unbrauchbarkeit des Trägermaterials führen können.

Die Verwendung von Polyethylen niedriger Dichte (LDPE), hergestellt durch Polymerisation von Ethylen nach dem Hochdruckverfahren, überträgt auf den fotografischen Papierträger die Nachteile der unzureichenden Steifigkeit und Härte dieses Polyethylens, was sich in ungenügender Gesamtsteifigkeit des Endproduktes und, insbesondere bei glänzenden Oberflächen, durch erhöhte Neigung zum Kleben in der gewickelten Rolle bemerkbar macht.

Aber auch die Verwendung von Polyethylen höherer Dichte (HDPE), hergestellt durch Polymerisation von Ethylen nach dem Niederdruckverfahren, überträgt auf den fotografischen Papierträger Nachteile, die durch die höhere Schmelzviskosität und Kristallinität des HDPE oder durch die diesem Polyethylen zwecks Stabilisierung notwendigerweise zugefügten Hilfsmittel entstehen, wenn dieses zur Vorderseitenbeschichtung verwendet wird. Dieses sind unter anderem eine schwache oder ungenügende Haftung auf dem Papierträger und eine unbefriedigende Planlage des beschichteten Papieres. Auch die geringe Ausziehfähigkeit des HD-Polyethylens kann, insbesondere wenn dünnere Überzüge gewünscht sind, von Nachteil sein.

Um die durch die einzelnen Polyethylentypen eingebrachten Nachteile zu begrenzen, werden daher üblicherweise optimierte Mischungen aus LDPE und HDPE eingesetzt.

Beiden Polyethylentypen und ihren Mischungen ist gemeinsam, daß sie sich nur begrenzt mit Pigmenten füllen lassen. In der DE-OS 34 11 681 ist beschrieben, wie sehr die Schärfe einer fotografischen Abbildung von der Reflexion des auftreffenden Lichtes an den Weißpigmenten abhängt. Deshalb ist es ein wichtiges Ziel aller lichtempfindlichen Trägermaterialien, diese Reflexion des auftreffenden Lichtes zu verbessern. Das geschieht dadurch, daß Weißpigmente mit höchsten Brechungsindices eingesetzt werden (Titandioxid) und daß der Gehalt an Weißpigmenten im Polyolefinharz bei sehr guter Dispergierung möglichst hoch ist, so daß eine dichte Pigmentpackung an der Oberfläche entsteht. Pigmentagglomerate im Polyolefinharz müssen dabei vermieden werden, da sie einerseits die gesamte Lichtreflexion verringern und andererseits beim Ausziehen des Schmelzfilms bei der Extrusionsbeschichtung und beim Begießen des

2

EP 0 290 852 B1

Schichtträgers mit lichtempfindlichen Emulsionen zu Störungen führen.

In der Praxis der Extrusionsbeschichtung ist die Pigmentkonzentration in einer Polyethylenharz-Beschichtungsmischung bislang auf weniger als 20 Gew.% begrenzt und liegt üblicherweise zwischen 10 und 17 Gew.%. Dies gilt sowohl für reines LDPE als auch für die beschriebenen Mischungen aus LDPE und HDPE.

Die verschiedenen Probleme, die allen mit Polyethylen beschichteten fotografischen Trägerpapieren anhaften, haben immer gezielte Weiterentwicklungen ausgelöst. Solche sind beispielsweise in der deutschen Patentanmeldung P 36 27 859.9 beschrieben. Gemäß dieser Patentanmeldung werden in der Summe der Nachteile in einigen Punkten deutliche Verbesserungen erreicht. Nicht befriedigend ist jedoch die Begrenzung der Titandioxid-Konzentration auf etwa 20 % und die nur wenig verringerte Zahl der Pigmentagglomerate.

Es ist auch ein fotografischer Papierträger vorgeschlagen worden (EP-A-0 183 467), der auf seiner Vorderseite eine coextrudierte Beschichtung aufweist, und zwar eine erste Schicht aus LDPE Polyethylen oder einer Mischung aus LDPE und HDPE, die mit wenigstens 5 Gew.% opak pigmentiert ist und auf eine weitere Schicht aufgetragen ist, die aus einem Polymercarbonatharz besteht. Man will damit erreichen, daß das Papier eine gewisse Steifigkeit erhält und außerdem einen hohen Pigmentanteil durch Verringerung der Dicke der zuerst aufgetragenen pigmentierten Schicht, so daß dadurch der Pigmentgehalt automatisch höher wird. Dieses Verfahren ist aber sowohl verfahrensmäßig als auch apparativ aufwendig.

Aufgabe der Erfindung ist es daher, ein mit Polyolefinharz beschichtetes fotografisches Trägermaterial zur Verfügung zu stellen, das bei Verwendung von Titandioxidpigment in der Vorderseitenbeschichtung eine höhere Pigmentfüllung und eine geringere Anzahl an Pigmentagglomeraten aufweist. Des weiteren ist es die Aufgabe der Erfindung, eine Beschichtungsmischung zur Verfügung zu stellen. mit der oben genanntes fotografisches Trägermaterial hergestellt werden kann.

Diese Aufgabe wird dadurch gelöst, daß die Vorderseitenbeschichtung ein Copolymerisat aus Ethylen und wenigstens einem anderen $\alpha$-Olefin enthält. Solche Copolymere sind als sogenannte LLDPE-Typen im Prinzip bekannt und können nach dem Niederdruckverfahren und dem Hochdruckverfahren hergestellt werden. Die Wahl der $\alpha$-Olefine ist durch die jeweiligen Verfahren vorgegeben.

Diese sogenannte "lineare LDPE's" (LLDPE) haben je nach Art und Gehalt an Comonomeren eine Dichte von 0,880 - 0,960 g/m$^3$. Durch Verwendung dieser modifizierten Polyethylene mit stereospezifischer Anordnung der Seitenketten sind eine ganze Reihe von Verbesserungen möglich. So haben beispielsweise LLDPE's höhere Steifigkeit und Kristallinität als LDPE; sie stehen hinsichtlich der Molekularstruktur dem HDPE näher. Gegenüber LDPE sind außerdem Durchstoß- und Abriebfestigkeit verbessert (Plastverarbeiter 33 (1982), 9, S.1035-1037, sowie Kunststoffe 73 (1983), 5, S. 251-254).

Überraschend zeigte sich jedoch, daß durch den Zusatz von LLDPE zur Beschichtungsmasse, bestehend im wesentlichen aus Polyolefinharz und Titandioxid, eine wesentlich höhere Pigmentfüllung möglich wurde und diese sogar einen geringeren Anteil an Pigmentagglomeraten aufwies. Unerwartet ergab sich außerdem eine festere Haftung der erfindungsgemäßen Beschichtungsmasse auf dem Basispapier, als mit einer Beschichtungsmasse ohne LLDPE unter gleichen Bedingungen.

Insbesondere ließ der Anteil an Pigmentagglomeraten verringern, wenn das Titandioxid mit LLDPE zunächst zu einer Vormischung mittels Kneter oder Granulierextruder verarbeitet wurde. Solche Vormischungen, deren Titandioxidgehalt bis zu 70 Gew.-% betragen kann, stellen somit eine besondere Form der Erfindung dar. Sie können mit den anderen Komponenten zu den entsprechenden Beschichtungsmassen zusammengefügt werden.

Weiterhin überraschend war, daß sich selbst hochgefüllte (mit mehr als 15 Gew.-% Titandioxid) erfindungsgemäße Polyolefinharzschmelzen bei vorgegebener Breitschlitzdüse auf dünnere Schichtdicken ausziehen ließen als bei Alleinverwendung von LDPE, HDPE oder Mischungen beider. Dieses ist in Verbindung mit der höheren Pigmentierbarkeit solcher Polyethylenmischungen vorteilhaft, weil es dadurch möglich wird, dünnere Polyethylenschichten auf der Vorderseite aufzubringen, ohne daß die Remission verschlechtert wird. Mit einer dünneren Vorderseitenbeschichtung läßt sich auch die Rückseitenbeschichtung in der Dicke reduzieren. Niedrigere Schichtdicken ermöglichen aber bei vorhergegebener Gesamtdicke des beschichteten Papieres eine höhere Dicke des Papierkerns, was sich in einer deutlichen und erwünschten Erhöhung der Steifigkeit des Endproduktes, sowie in geringeren Fertigungskosten bemerkbar macht.

Der wasserfeste Schichtträger für lichtempfindliche Schichten ist ein Material, welches auf der Vorderseite mit einem Polyolefinharz überzogen ist. Der Überzug auf der Vorderseite enthält außerdem ein lichtreflektierendes Weißpigment. Der Polyolefinharzüberzug wird dann mit lichtempfindlichen Schichten überzogen. Der Schichtträger kann Papier oder ein Film sein.

Das Polyolefinharz auf der Vorderseite enthält ein sogenanntes lineares Polyethylen niedriger Dichte (LLDPE) ein Copolymer aus Ethylen und einem nichtethylenischen α-Olefin. Das α-Olefin ist ein ungesättigter aliphatischer Kohlenwasserstoff mit einer Doppelbindung an einem endständigen Kohlenstoffatom. Solche LLDLE Kunststoffe sind bekannt und beispielsweise beschrieben in "A study of linear low-density polyethylenes: branch content, branch distribution and crystallinity" von C. France et. al. in Polymer, 1987, Vol. 28. April, pages 710 - 712.

Ein Polyolefinharz kann auch auf der gegenüberliegenden Seite des Schichtträgers, also auf die Rückeite, aufgetragen werden. Diese Rückseitenbeschichtung kann aus irgendeinem Polyolefintyp bestehen. Bevorzugte Kombination ist ein Gemisch aus HDPE und LDPE, welcher auch LLDPE zugesetzt werden kann.

Der Schichtträger kann schließlich aus irgendeinem fotografischen Basispapier oder Basisfilmmaterial bestehen, wobei das Papier aus natürlichen oder synthetischen Fasern bestehen kann.

Das lichtreflektierende Weißpigment in der Vorderseitenbeschichtung kann ein Titandioxid sein. Der Gehalt an Titandioxid in dem Beschichtungsmaterial kann bis 40 Gew.% betragen. Die Beschichtungsmasse kann schließlich auch noch ein oder mehrere Zusätze enthalten, beispielsweise Mattierungsmittel, Antistatika, Antioxidantien, Gleitmittel, Schmiermittel, Pigmente, Nuancierungen, Farbstoffe, optische Aufheller und Trennmittel.

Das sogenannte LLDPE ist ein Copolymer aus Ethylen und wenigstens einem anderen α-Olefin mit einer Kettenlänge von 3 - 18 Kohlenstoffatomen, vorzugsweise 4 - 8 Kohlenstoffatomen, wobei der Anteil des nichtethylenischen α-Olefins in dem Copolymer von etwa 0,1 - 20 Mol.-% betragen kann.

Erindungsgemäß wird ferner eine Vormischung zur Herstellung einer Beschichtung für einen wasserfesten Schichtträger mit einem Polyolefinharz und dem darin enthaltenden lichtreflektierenden Weißpigment beschrieben. Die Polyolefinkomponente in der Vormischung ist ein Copolymer, nämlich ein sogenanntes lineares Polyethylen niedriger Dichte (LLDPE).

Das lichtreflektierende Weißpigment wird innig mit dem Polylefinharz vermischt. Das Weißpigment ist vorzugsweise Titandioxid und sein Gehalt in der Beschichtung liegt im Bereich zwischen 10 und 70 Gew.-% und die Mischung kann auch die obenerwähnten Zusätze enthalten. Der Anteil an LLDPE in dieser Vormischung reicht von 10 Gew.-% bis 100 Gew.-% des vollständigen Polyolefinharzes. Die Beschichtung des wasserfesten Schichtträgers mit dem Polyolefinharz geschieht durch Schmelzextrusion des Harzes auf den Schichtträger.

Die folgenden Beispiele erläutern die Erfindung:

Beispiel 1

Ein Fotobasispapier mit einem Flächengewicht von 175 g/m$^2$ wurde nach Corona-Vorbehandlung auf der Rückseite mit 25 g/m$^2$ folgender Mischung beschichtet:
70 Gew.-% HDPE[1]), $\rho$ = 0,950 g/cm$^3$
30 Gew.-% LDPE[2]), $\rho$ = 0,924 g/cm$^3$
Unmittelbar anschließend erfolgte nach einer Corona-Vorbehandlung die Beschichtung der Vorderseite mit 30 g/m$^2$ der folgenden Mischungen:

1) HDPE = hochdichtes Polyethylen (high density PE)

2) LDPE = niederdichtes Polyethylen (low density PE)

| | LDPE $\varrho = 0{,}924$ g/cm$^3$ | LLDPE $\varrho = 0{,}935$ g/cm$^3$ mit 1,0 Mol% Okten | Vormischung A | B |
|---|---|---|---|---|
| a | 64 | 0 | 36 | 0 |
| b | 64 | 0 | 20 | 16 |
| c | 57,5 | 6,5 | 0 | 36 |
| d | 24,5 | 39,5 | 0 | 36 |

## Vormischung

A = 50 Gew.-% Titandioxid , Rutil 97,5 %ig, stabilisiert mit $Al_2O_3$

50 Gew.-% LDPE $\varrho = 0{,}924$ g/cm$^3$

B = 50 Gew.-% Titandioxid, Rutil 97,5 %ig, stabilisiert mit $Al_2O_3$,
50 Gew.-% LLDPE $\varrho = 0{,}935$ g/cm$^3$, mit 1,0 Mol-% Okten

Die Vormischungen wurden mit einem Granulierextruder bei 130°C hergestellt.
Die Beschichtungen wurden mittels einer Tandemextrusionsbeschichtungsanlage bei 310°C Schmelztemperatur und 120 m/Min. Maschinengeschwindigkeit auf 120 cm Bahnbreite durchgeführt.

Beispiel 2

Das Fotobasispapier aus Beispiel 1 wurde auf der Rückseite beschichtet wie in Beispiel 1.
Anschließend erfolgte nach Corona-Vorbehandlung die Beschichtung der Vorderseite mit 30 g/m$^2$ der folgenden Mischungen:

|  | 70% LDPE, $\varrho$ =0,924g/cm³<br>30% HDPE, $\varrho$ =0,950g/cm³<br>- Mischung | LLDPE<br>$\varrho$ = 0,915 g/cm³<br>mit 3,1 Mol-% Buten | Vormischung<br>A | C |
|---|---|---|---|---|
| a | 70 | 0 | 30 | - |
| b | 52 | 0 | 48 | - |
| c | 54 | 16 | - | 30 |
| d | 44 | 8 | - | 48 |
| e | 34 | 0 | - | 66 |
| f | 45 | 25 | 30 | - |

## Vormischung

C =  50 Gew.-% Titandioxid, Rutil 97,5 %ig, stabilisiert mit $Al_2O_3$

30 Gew.-% LLDPE, $\varrho$ = 0,915 g/cm³ mit 3,1 Mol-% Buten

20 Gew.-% LDPE, $\varrho$ = 0,924 g/cm³

Die Beschichtung wurde mittels eines Technikums-Schmelzextruders bei 300°C Schmelztemperatur und 20 m/Min. Maschinengeschwindigkeit auf 25 cm Bahnbreite durchgeführt.

### Beispiel 3

Ein Fotobasispapier mit einem Flächengewicht von 200 g/m² wurde nach Corona-Vorbehandlung auf der Rückseite mit 15 g/m² folgender Mischung beschichtet:

60 Gew.-% LDPE, $\rho$ = 0,924 g/cm³
40 Gew.-% LLDPE, $\rho$ = 0,935 g/cm³ mit 1,0 Mol-% Okten

Unmittelbar anschließend erfolgte nach Corona-Vorbehandlung die Beschichtung der Vorderseite entsprechend nachstehender Tabelle:

| | Auftrag<br>g/m² | LDPE<br>$\varrho = 0,924 g/cm^3$ | Vormischung | |
|---|---|---|---|---|
| | | | D | E |
| a | 15 | 64 | 36 | – |
| b | 12,5 | 64 | 36 | – |
| c | 10 | 64 | 36 | – |
| d | 15 | 64 | – | 36 |
| e | 12,5 | 64 | – | 36 |
| f | 10 | 64 | – | 36 |

Die Vormischungen hatten die Zusammensetzung:

D =  50    Gew.-% LDPE, $\varrho = 0,924$ g/cm³

48,5 Gew.-% Titandioxid, Rutil 97,5 %ig, stabilisiert mit $Al_2O_3$

0,5 Gew.-% Ultramarinblau

0,6 Gew.-% Antioxidant (Tinuvin 770)

0,2 Gew.-% Metallstearat

0,2 Gew.-% Cobaltviolett

E =  50    Gew.-% LLDPE, $\varrho = 0,920$ g/cm³ mit 3,2 Mol-% Okten

48,5 Gew.-% Titandioxid, Rutil 97,5 %ig, stabilisiert mit $Al_2O_3$

0,5 Gew.-% Ultramarinblau

0,6 Gew.-% Antioxidant (Tinuvin 770)

0,2 Gew.-% Metallstearat

0,2 Gew.-% Cobaltviolett

Die Vormischungen wurden bei 130°C mit einem Granulierextruder hergestellt.

Alle Beschichtungen wurden mittels Tandemextrusionsbeschichtungsanlage bei 310°C Schmelztemperatur und 150 m/Min. Maschinengeschwindigkeit auf 120 cm Bahnbreite durchgeführt.

Beispiel 4

Das Fotobasispapier aus Beispiel 1 wurde auf der Rückseite beschichtet wie in Beispiel 1. Anschließend erfolgte nach Corona-Vorbehandlung die Beschichtung der Vorderseite mit 30 g/m² der folgenden Mischungen:

|  | LDPE | Vormischung aus |
|---|---|---|
|  | $\varrho$ = 0,924 g/cm³ | 50 Gew.-% Titandioxid, Rutil aus Beispiel 1 - 3 |
|  |  | 50 Gew.-% LLDPE der folgenden Art |
| a | 60 Gew.-% | 40 Gew.-% LLDPE mit 14,2 Mol-% Propen-(1) |
| b | 60 Gew.-% | 40 Gew.-% LLDPE mit 8,7 Mol-% Buten-(1) |
| c | 60 Gew.-% | 40 Gew.-% LLDPE mit 3,2 Mol-% Buten-(1) |
| d | 60 Gew.-& | 40 Gew.-% LLDPE mit 5,6 Mol-% 4-Methyl-penten-(1) |
| e | 60 Gew.-% | 40 Gew.-% LLDPE mit 4,2 Mol-% Okten-(1) |
| f | 60 Gew.-% | 40 Gew.-% LLDPE mit 1,0 Mol-% Okten-(1) |
| g | 60 Gew.-% | 40 Gew.-% LLDPE mit 0,2 Mol-% Hexadeken-(1) |
| h | 60 Gew.-% | 40 Gew.-% LDPE als Vergleich, Vormischung A |

Die Vormischungen wurden bei 130°C mit einem Granulierextruder hergestellt.

Die Beschichtungen wurden mittels Schmelzextruder bei 300°C Schmelztemperatur und 20 m/Min. Maschinengeschwindigkeit auf 25 cm Bahnbreite durchgeführt.

Beschreibung der Prüfmethoden

Filtratest: 200 g Vormischung mit 50 Gew.-% Titandioxid und 50 Gew.-% Polyolefinharz werden im Technikumsextruder bei einer Schmelztemperatur von 300°C durch ein vorgewogenes Sieb von 25 μm Maschenweite geschickt. Mit reinem Polyolefinharz wird so lange weiterextrudiert, bis alles pigmenthaltige Material das Sieb passiert hat. Nach dem Ausglühen des Siebes bei 800°C wird der Siebrückstand gravimetrisch bestimmt und umgerechnet auf mg Rückstand/1kg Titandioxid.

Stippenniveau: Im Durchlicht werden an 1m² des beschichteten Papieres die Pigmentagglomerate ausgezählt, die ohne Lupe als dunkle Punkte auf einem Leuchttisch erkennbar sind. Diese Zahl wird als Stippen/m² angegeben.

Filmhaftung: Die Haftung des Polyolefinharzfilms auf der Vorderseite des Basispapieres wird beurteilt durch Abziehen eines 10 mm breiten Streifens in Laufrichtung der Beschichtung. Erteilt werden Noten von 1 bis 5, wobei Note 1 eine sehr gute Haftung und Note 5 keine Haftung bedeuten.

8

Prüfergebnisse

| Vormischung | Mischung Titandioxid ($TiO_2$) mit | Filtratest mg Rückst./kg $TiO_2$ |
|---|---|---|
| A | LDPE, $\varrho$ = 0,924 g/cm³ | 87 |
| B | LLDPE (1,0 Mol-% Okten-(1)) | 24 |
| C | LDPE:LLDPE (3, Mol-% Buten-(1))3:2 | 52 |
| D | LDPE, $\varrho$ = 0,924 g/cm³ | 93 |
| E | LLDPE (3,2 Mol-% Okten-(1)) | 31 |
| 4a | LLDPE (14,2 Mol-% Propen-(1)) | 19 |
| 4b | LLDPE ( 8,7 Mol-% Buten-(1)) | 21 |
| 4c | LLDPE (3,2 Mol-% Buten-(1)) | 25 |
| 4d | LLDPE (5,6 Mol-% Hexen-(1)) | 25 |
| 4e | LLDPE (4,2 Mol-% Okten-(1)) | 32 |
| 4f | LLDPE (1,0 Mol-% Okten-(1)) | 37 |
| 4g | LLDPE (0,2 Mol-% Hexadeken-(1)) | 34 |

(Tab.1)

Prüfergebnisse

| Beispiel | Zusammensetzung der Vorderseitenbeschichtung | | | | Stippenniveau (St./m²) | Filmhaftung (Note) |
|---|---|---|---|---|---|---|
| | Titandioxid | LDPE | HDPE | LLDPE | | |
| 1a Vgl. | 18 Gew.-% | 82 Gew.-% | | 0 Gew.-% | 12 | 3 |
| b | 18 Gew.-% | 74 Gew.-% | | 8 Gew.-% | 9 | 3 |
| c | 18 Gew.-% | 57,5 Gew.-% | | 24,5 Gew.-% | 6 | 2 |
| d | 18 Gew.-% | 24,5 Gew.-% | | 57,5 Gew.-% | 7 | 1 |
| 2a Vgl. | 15 Gew.-% | 64 Gew.-% | 21 Gew.-% | 0 Gew.-% | 13 | 3 |
| b Vgl. | 24 Gew.-% | 60,4 Gew.-% | 15,6 Gew.-% | 0 Gew.-% | Aufrisse im Film nicht ausgewertet | Aufrisse im Film nicht ausgewertet |
| c | 15 Gew.-% | 43,8 Gew.-% | 16,2 Gew.-% | 25 Gew.-% | 5 | 1 |
| d | 24 Gew.-% | 40,4 Gew.-% | 13,2 Gew.-% | 22,4 Gew.-% | 7 | 2 |
| e | 33 Gew.-% | 37 Gew.-% | 10,2 Gew.-% | 19,8 Gew.-% | 8 | 2 |
| f | 15 Gew.-% | 46,5 Gew.-% | 13,5 Gew.-% | 25 Gew.-% | 9 | 1 |
| 3a Vgl. | 17,5 Gew.-% | 82 Gew.-% | | 0 Gew.-% | 13 | 4 |
| b Vgl. | 17,5 Gew.-% | 82 Gew.-% | | 0 Gew.-% | 11 | 4 |
| c Vgl. | 17,5 Gew.-% | 82 Gew.-% | | 0 Gew.-% | Aufrisse im Film nicht ausgewertet | Aufrisse im Film nicht ausgewertet |
| d | 17,5 Gew.-% | 64 Gew.-% | | 18 Gew.-% | 6 | 3 |
| e | 17,5 Gew.-% | 64 Gew.-% | | 18 Gew.-% | 5 | 4 |
| f | 17,5 Gew.-% | 64 Gew.-% | | 18 Gew.-% | 7 | 4 |
| 4a | 20 Gew.-% | 60 Gew.-% | | 20 Gew.-% | 7 | |
| b | 20 Gew.-% | 60 Gew.-% | | 20 Gew.-% | 6 | |
| c | 20 Gew.-% | 60 Gew.-% | | 20 Gew.-% | 4 | |
| d | 20 Gew.-% | 60 Gew.-% | | 20 Gew.-% | 5 | |
| e | 20 Gew.-% | 60 Gew.-% | | 20 Gew.-% | 6 | |
| f | 20 Gew.-% | 60 Gew.-% | | 20 Gew.-% | 7 | |
| g | 20 Gew.-% | 60 Gew.-% | | 20 Gew.-% | 8 | |
| h Vgl. | 20 Gew.-% | 80 Gew.-% | | 0 Gew.-% | 12 | |

(Tab. 2)

Die Ergebnisse vom Filtratest der Vormischungen und das Stippenniveau der gefahrenen Beschichtungen zeigen, daß erfindungsgemäße Mischungen mit LLDPE eine geringere Tendenz zur Bildung von Pigmentagglomeraten haben.

Die Beispiele aus Reihe 2 zeigen, daß mit LLDPE-Vormischungen höher pigmentierte Schichten gefahren werden können als bisher mit LDPE- oder HDPE-Vormischungen. Beispiel 2f zeigt, daß ein geringeres Stippenniveau nur bedingt erreicht werden kann, wenn das LLDPE der Beschichtungsmasse direkt zugesetzt wird, die Zugabe also nicht über eine Vormischung erfolgt.

Die Beispiele aus Reihe 3 zeigen, daß deutlich dünnere Beschichtungen aus einer Schmelze ausgezogen werden können, wenn diese LLDPE enthält. Dieses gilt sogar bei den aufgeführten relativ hoch mit Titandioxid gefüllten Polyolefinharzen.

Die Beispiele aus Reihe 4 zeigen, daß die aufgezeigten Vorteile mit verschiedenen LLDPE-Typen erreichbar sind.

Aus den Beispielen 1, 2 und 3 geht hervor, daß LLDPE in der Beschichtungsmasse schließlich sogar die Haftung der Vorderseitenbeschichtung auf dem Papier verbessert.

**Patentansprüche**

1. Wasserfester Schichtträger für lichtempfindliche Materialien, bestehend aus einem Kernmaterial, das ein- oder beidseitig mit einer einzigen Polyolefinharzschicht überzogen ist, wobei diese Überzugsmasse auf der mit dem lichtempfindlichen Material zu beschichtenden Vorderseite zusätzlich lichtreflektierendes Weißpigment enthält, **dadurch gekennzeichnet,** daß die Polyolefinharzschicht der Vorderseite oder der Vorder- und Rückseite eine homogene Schicht ist und ganz oder teilweise ein Copolymerisat aus Ethylen und anderem $\alpha$-Olefin, sogenanntes LLDPE ist.

2. Verfahren zur Herstellung des Gegenstandes nach Anspruch 1 mittels Schmelzextrusion, dadurch gekennzeichnet, daß als Überzugsmasse ganz oder teilweise ein Copolymerisat aus Ethylen und anderem $\alpha$-Olefin, sogenanntes LLDPE, verwendet wird.

3. Verwendung des Gegenstandes nach Anspruch 1, dadurch gekennzeichnet, daß es als Schichtträger für lichtempfindliche Materialien eingesetzt wird.

4. Schichtträger nach Anspruch 1, dadurch gekennzeichnet, daß das Kernmaterial ein Papier- oder Filmmaterial ist.

5. Schichtträger nach Anspruch 1, dadurch gekennzeichnet, daß das lichtreflektierende Weißpigment Titandioxid ist.

6. Schichtträger nach Anspruch 1, dadurch gekennzeichnet, daß die Überzugsmasse wenigstens einen der üblichen Zusätze aus der Gruppe der Mattierungsmittel, Antistatika, Antioxidantien, Gleitmittel, Farbstoffe, optischen Aufheller, Trennmittel enthält.

7. Schichtträger nach Anspruch 1, dadurch gekennzeichnet, daß das $\alpha$-Olefin im Copolymerisat aus $C_3$- bis $C_{18}$- Kohlenstoffketten besteht.

8. Schichtträger nach Anspruch 7, dadurch gekennzeichnet, daß das $\alpha$-Olefin im Copolymerisat aus $C_4$- bis $C_8$- Kohlenstoffketten besteht.

9. Schichtträger nach Anspruch 1, dadurch gekennzeichnet, daß der Gehalt an $\alpha$-Olefin in dem Copolymerisat zwischen 0,1 Mol-% und 20 Mol-% liegt.

10. Schichtträger nach Anspruch 5, dadurch gekennzeichnet, daß der Gehalt an Titandioxid in der Überzugsmasse zwischen 5 Gew.-% und 40 Gew.-% liegt.

11. Verfahren nach Anspruch 2, dadurch gekennzeichnet, daß mit der Überzugsmasse ein Kernmaterial aus Papier- oder Filmmaterial beschichtet wird.

12. Verfahren nach Anspruch 2, dadurch gekennzeichnet, daß das lichtreflektierende Weißpigment Titandioxid ist.

13. Verfahren nach Anspruch 2, dadurch gekennzeichnet, daß die Überzugsmasse wenigstens einen der üblichen Zusätze aus der Gruppe der Mattierungsmittel, Antistatika, Antioxidantien, Gleitmittel, Farbstoffe, optischen Aufheller, Trennmittel enthält.

14. Verfahren nach Anspruch 2, dadurch gekennzeichnet, daß das $\alpha$-Olefin im Copolymerisat aus $C_3$- bis $C_{18}$-Kohlenstoffketten besteht.

15. Verfahren nach Anspruch 14, dadurch gekennzeichnet, daß das $\alpha$-Olefin im Copolymerisat aus $C_4$- bis $C_8$-Kohlenstoffketten besteht.

16. Verfahren nach Anspruch 2, dadurch gekennzeichnet, daß der Gehalt an $\alpha$-Olefin in dem Copolymerisat zwischen 0,1 Mol-% und 20 Mol-% liegt.

17. Verfahren nach Anspruch 12, **dadurch gekennzeichnet,** daß der Gehalt an Titandioxid in der Überzugsmasse 5 Gew.% bis 40 Gew.% beträgt.

18. Vormischung für die Herstellung wasserfester mit Polyolefinharz überzogener Schichtträger für lichtempfindliche Materialien aus Polyolefinharz und lichtreflektierendem Weißpigment, **dadurch gekennzeichnet,** daß das Polyolefinharz ganz oder teilweise ein Copolymerisat, ein sogenanntes LLDPE ist.

19. Vormischung nach Anspruch 18, **dadurch gekennzeichnet,** daß das lichtreflektierende Weißpigment Titandioxid ist.

20. Vormischung nach Anspruch 18, **dadurch gekennzeichnet,** daß sie wenigstens einen der üblichen Zusätze aus der Gruppe der Farbstoffe, optischen Aufheller, Mattierungsmittel, Dispergiermittel, Gleitmittel, Trennmittel, Antistatika und Antioxidantien enthält.

21. Vormischung nach Anspruch 18, **dadurch gekennzeichnet,** daß der Anteil an LLDPE 10 Gew.% bis 100 Gew.% des gesamten Polyolefinharzes beträgt.

22. Vormischung nach Anspruch 18, **dadurch gekennzeichnet,** daß das $\alpha$-Olefin im Copolymerisat aus $C_3$- bis $C_{18}$-Kohlenstoffketten besteht.

23. Vormischung nach Anspruch 18, **dadurch gekennzeichnet,** daß das $\alpha$-Olefin im Copolymerisat aus $C_4$- bis $C_8$-Kohlenstoffketten besteht.

24. Vormischung nach Anspruch 18, **dadurch gekennzeichnet,** daß der Gehalt an $\alpha$-Olefin im Copolymerisat zwischen 0,1 Mol.-% und 20 Mol.-% liegt.

25. Vormischung nach Anspruch 19, **dadurch gekennzeichnet,** daß der Gehalt an Titandioxid in der Vormischung 10 Gew.% bis 70 Gew.% beträgt.

## Claims

1. Water-resistant coating support for photosensitive materials, consisting of a core material which is coated on one or both faces with a single polyolefin resin layer, wherein this coating material contains, on the front face to be coated with the photosensitive material, light-reflecting white pigment in addition, characterized in that the polyolefin resin layer of the front face or of the front and rear faces is a homogeneous layer and is entirely or partly a copolymer of ethylene and another $\alpha$-olefin, so-called LLDPE (linear low density polyethylene).

2. Method of making the object according to Claim 1 by melt extrusion, characterized in that a copolymer of ethylene and another $\alpha$-olefin, so-called LLDPE, is used wholly or partly as coating material.

3. Use of the object according to Claim 1, characterized in that it is used as a coating support for photosensitive materials.

4. Coating support according to Claim 1, characterized in that the core material is a paper material or film material.

EP 0 290 852 B1

5. Coating support according to Claim 1, characterized in that the light-reflecting white pigment is titanium dioxide.

6. Coating support according to Claim 1, characterized in that the coating material contains at least one of the usual admixtures from the group of the matting agents, antistatic agents, antioxidants, lubricants, dyes, optical brighteners, and parting agents.

7. Coating support according to Claim 1, characterized in that the $\alpha$-olefin in the copolymer consists of $C_3$- to $C_{18}$- carbon chains.

8. Coating support according to Claim 7, characterized in that the $\alpha$-olefin in the copolymer consists of $C_4$- to $C_8$- carbon chains.

9. Coating support according to Claim 1, characterized in that the content of $\alpha$-olefin in the copolymer lies between 0.1 mol % and 20 mol %.

10. Coating support according to Claim 5, characterized in that the content of titanium dioxide in the coating material lies between 5% by wt. and 40% by wt..

11. Method according to Claim 2, characterized in that a core material of paper material or film material is coated with the coating compound.

12. Method according to Claim 2, characterized in that the light-reflecting white pigment is titanium dioxide.

13. Method according to Claim 2, characterized in that the coating material contains at least one of the usual admixtures from the group of the matting agents, antistatic agents, antioxidants, lubricants, dyes, optical brighteners and parting agents.

14. Method according to Claim 2, characterized in that the $\alpha$-olefin in the copolymer consists of $C_3$- to $C_{18}$- carbon chains.

15. Method according to Claim 14, characterized in that the $\alpha$-olefin in the copolymer consists of $C_4$- to $C_8$- carbon chains.

16. Method according to Claim 2, characterized in that the content of $\alpha$-olefin in the copolymer lies between 0.1 mol % and 20 mol %.

17. Method according to Claim 12, characterized in that the content of titanium dioxide in the coating material is from 5% by wt. to 40% by wt..

18. Premixture for the production of water-resistant coating supports coated with polyolefin resin for photosensitive materials of polyolefin resin and light-reflecting white pigment, characterized in that the polyolefin resin is entirely or partly a copolymer, a so-called LLDPE.

19. Premixture according to Claim 18, characterized in that the light-reflecting white pigment is titanium dioxide.

20. Premixture according to Claim 18, characterized in that it contains at least one of the usual admixtures from the group of the dyes, optical brighteners, matting agents, dispersing agents, lubricants, parting agents, antistatic agents and antioxidants.

21. Premixture according to Claim 18, characterized in that the content of LLDPE is from 10% by wt. to 100% by wt. of the total polyolefin resin.

22. Premixture according to Claim 18, characterized in that the $\alpha$-olefin in the copolymer consists of $C_3$- to $C_{18}$- carbon chains.

13

**23.** Premixture according to Claim 18, characterized in that the $\alpha$-olefin in the copolymer consists of $C_4$- to $C_8$- carbon chains.

**24.** Premixture according to Claim 18, characterized in that the content of $\alpha$-olefin in the copolymer lies between 0.1 mol % and 20 mol %.

**25.** Premixture according to Claim 19, characterized in that the content of titanium dioxide in the premixture is from 10% by wt. to 70% by wt..

**Revendications**

**1.** Support de couche résistant à l'eau pour matériaux photosensibles, constitué d'un matériau de la couche centrale qui est revêtu sur une face ou sur les deux faces par une seule couche de résine de polyoléfine, ladite masse d'enduction contenant en outre un pigment blanc réfléchissant la lumière sur la face antérieure à revêtir du matériau photosensible, CARACTERISE en ce que la couche de résine de polyoléfine de la face antérieure ou de la face antérieure et de la face postérieure est une couche homogène et est formée totalement ou partiellement d'un copolypmère d'éthylène et d'une autre oléfine-$\alpha$ appelée LLDPE.

**2.** Procédé de production de l'objet de la revendication 1 par extrusion à fusion, caractérisé en ce que la masse d'enduction utilisée est totalement ou partiellement un copolymère d'éthylène et d'une autre oléfine-$\alpha$ appelée LLDPE.

**3.** Utilisation de l'objet de la revendication 1, caractérisée en ce qu'il est utilisé comme support de couche pour matériaux photosensibles.

**4.** Support de couche selon la revendication 1, caractérisé en ce que le matériau de la couche centrale est un matériau en papier ou en film.

**5.** Support de couche selon la revendication 1, caractérisé en ce que le pigment blanc résistant à la lumière est du dioxyde de titane.

**6.** Support de couche selon la revendication 1, caractérisé en ce que la masse d'enduction contient au moins l'un des additifs usuels choisis dans le groupe des agents de mattage, des agents antistatiques, des antioxydants, des agents anti-friction, des colorants, des agents de blanchiment optique et des agents de séparation.

**7.** Support de couche selon la revendication 1, caractérisé en ce que l'oléfine-$\alpha$ dans le copolymère est constituée de chaînes de carbone ayant de 3 à 18 atomes de carbone.

**8.** Support de couche selon la revendication 1, caractérisé en ce que l'oléfine-$\alpha$ dans le copolymère est constituée de chaînes de carbone ayant de 4 à 8 atomes de carbone.

**9.** Support de couche selon la revendication 1, caractérisé en ce que la teneur en oléfine-$\alpha$ dans le copolymère est comprise entre 0,1 mole-% et 20 moles-%.

**10.** Support de couche selon la revendication 5, caractérisé en ce que la teneur en dioxyde de titane dans la masse d'enduction est comprise entre 5% en poids et 40% en poids.

**11.** Procédé selon la revendication 2, caractérisé en ce que la masse d'enduction sert à revêtir un matériau de la couche centrale qui est un papier ou un film.

**12.** Procédé selon la revendication 2, caractérisé en ce que le pigment blanc réfléchissant la lumière est du dioxyde de titane.

**13.** Procédé selon la revendication 2, caractérisé en ce que la masse d'enduction contient au moins l'un des additifs usuels choisis dans le groupe des agents de mattage, des agents antistatiques, des antioxydants, des agents anti-friction, des colorants, des agents de blanchiment optique et des agents

14

de séparation.

14. Procédé selon la revendication 2, caractérisé en ce que l'oléfine-α dans le copolymère est constituée de chaînes de carbone avec de 3 à 18 atomes de carbone.

15. Procédé selon la revendication 14, caractérisé en ce que l'oléfine-α dans le copolymère est constituée de chaînes de carbone avec de 4 à 8 atomes de carbone.

16. Procédé selon la revendication 2, caractérisé en ce que la teneur en oléfine-α dans le copolymère est comprise entre 0,1 mole-% et 20 moles-%.

17. Procédé selon la revendication 12, caractérisé en ce que la teneur en dioxyde de titane dans la masse d'enduction est comprise entre 5% en poids et 40% en poids.

18. Mélange préliminaire pour la préparation de supports de couches résistant à l'eau et revêtues de résine de polyolafinee comme matériaux photosensibles constitué d'une résine de polyoléfine et d'un pigment blanc réfléchissant la lumière, caractérisé en ce que la résine de polyolfine est totalement oiu partiellement un copolymère appelé LLDPE.

19. Mélange préliminaire selon la revendication 18, caractérisé en ce que le pigment blanc réfléchissant la lumière est du dioxyde de titane.

20. Mélange préliminaire selon la revendication 18, caractérisé en ce qu'il contient au moins l'un des additifs usuels choisis dans le groupe des colorants, des agents de blanchiment optique, des agents de mattage, des agents de dispersion, des agents anti-friction, des agents de séparation, des antistatiques et des antioxydants.

21. Mélange préliminaire selon la revendication 18, caractérisé en ce que la teneur en LLDPE est comprise entre 10% en poids du total de la résine de polyoléfine.

22. Mélange préliminaire selon la revendication 18, caractérisé en ce que l'oléfine-α dans le copolymère est constituée de chaînes de carbone avec de 3 à 18 atomes de carbone.

23. Mélange préliminaire selon la revendication 18, caractérisé en ce que l'oléfine-α dans le copolymère est constituée de chaînes de carbone avec de 4 à 8 atomes de carbone.

24. Mélange préliminaire selon la revendication 18, caractérisé en ce que la teneur en oléfine-α dans le copolymère est comprise entre 0,1 mole-% et 20 moles-%.

25. Mélange préliminaire selon la revendication 19, caractérisé en ce que la teneur en dioxyde de titane dans le mélange préliminaire est comprise entre 10% en poids et 70% en poids.